# EUROPEAN PATENT APPLICATION

(11) **EP 4 808 027 A1**
(43) Date of publication of application: **16.09.2026**
(21) Application number: 24896359.7
(22) Date of filing: 19.11.2024
(51) Int. Cl.: H04L 1/18, H04W 72/11

(54) **METHOD FOR DEACTIVATING DOWNLINK SEMI-PERSISTENT SCHEDULING AND RELATED APPARATUS**

(30) Priority: 30.11.2023 CN 202311631107
(71) Applicant: Huawei Technologies Co., Ltd., Shenzhen, Guangdong 518129 (CN)
(72) Inventor: ZHOU, Runze, Shenzhen, Guangdong 518129 (CN); ZENG, Wenyuan, Shenzhen, Guangdong 518129 (CN); ZHOU, Yang, Shenzhen, Guangdong 518129 (CN)
(74) Representative: Goddar, Heinz J.
(86) International application number: PCT/CN2024/133062
(87) International publication number: WO 2025/113268

(57) **Abstract**

This application provides a method for deactivating downlink semi-persistent scheduling and a related apparatus, to help a network device maintain SPS status consistency with a terminal device in a timely manner, thereby avoiding data packet discarding occurring on the terminal device. The method includes: The network device activates the downlink SPS; and the network device deactivates the downlink SPS when a quantity of DTX feedbacks is equal to a quantity of HARQ channels configured for the downlink SPS.

## Description

This application claims priority to Chinese Patent Application No. 202311631107.1, filed with the China National Intellectual Property Administration on November 30, 2023 and entitled "METHOD FOR DEACTIVATING DOWNLINK SEMI-PERSISTENT SCHEDULING AND RELATED APPARATUS", which is incorporated herein by reference in its entirety.

### TECHNICAL FIELD

This application relates to the communication field, and in particular, to a method for deactivating downlink semi-persistent scheduling and a related apparatus.

### BACKGROUND

Semi-persistent scheduling (semi-persistent scheduling, SPS) allows a base station to configure radio resources semi-persistently or semi-persistently. After the radio resources are configured once, a terminal device may periodically use the radio resources, and the base station does not need to send a physical downlink control channel (physical downlink control channel, PDCCH) to the terminal device at each transmission time interval (transmission time interval, TTI) to indicate the radio resources, thereby reducing resource overheads of the PDCCH. During downlink SPS, the base station may specify a quantity of hybrid automatic repeat request (hybrid automatic repeat request, HARQ) channels for the downlink SPS. At a scheduling moment, the terminal device determines an index number of a currently used HARQ channel based on a current frame number and subframe number.

After the terminal device normally enters the downlink SPS, if the terminal device unilaterally exits the downlink SPS due to some reasons (for example, incorrectly detecting semi-persistent deactivation downlink control information (downlink control information, DCI)), a downlink SPS status mismatch occurs between the terminal device and the base station. In other words, the terminal device has exited the downlink SPS, but the base station does not exit the downlink SPS. In this case, when the base station sends an SPS data packet to the terminal device, the terminal device does not provide any feedback, and the base station performs retransmission processing based on a discontinuous transmission (discontinuous transmission, DTX) feedback. For example, the quantity of HARQ channels is M. When a quantity of DTX feedbacks for the SPS data packet reaches M+1, which exceeds the quantity M of HARQ channels, it means that the base station has performed M retransmissions via the M HARQ channels. In a subsequent (M+1)^{th} retransmission process, the base station retransmits the SPS data packet by reusing a HARQ channel used in the 1^{st} retransmission in previous M retransmission processes.

Because an index number of the HARQ channel used in the (M+1)^{th} retransmission is the same as an index number of the HARQ channel used in the 1^{st} retransmission, and a new data indicator (new data indication, NDI) in the (M+1)^{th} retransmission is also the same as that in the 1^{st} retransmission, the terminal device considers that a same data packet is retransmitted in the two retransmissions, and discards a data packet in the (M+1)^{th} retransmission, thereby causing data packet discarding.

Therefore, how to enable a base station to maintain SPS status consistency with a terminal device in a timely manner to avoid data packet discarding occurring on the terminal device is an urgent problem to be resolved.

### SUMMARY

This application provides a method for deactivating downlink semi-persistent scheduling and a related apparatus, to help a base station maintain SPS status consistency with a terminal device in a timely manner, thereby avoiding data packet discarding occurring on the terminal device.

According to a first aspect, a method for deactivating downlink semi-persistent scheduling is provided. The method may be performed by a first communication apparatus. The first communication apparatus may be a network device, may be a component (for example, a processor, a chip, or a chip system) configured in the network device, or may be a logical module or software that can implement all or some functions of the first communication apparatus. This is not limited in this application. The following describes the solutions of this application by using an example in which the first communication apparatus is the network device.

The method includes: activating the downlink SPS; and deactivating the downlink SPS when a quantity of DTX feedbacks is equal to a quantity of HARQ channels configured for the downlink SPS.

In this application, after the network device and a terminal device enter the downlink SPS, because the terminal device exits the downlink SPS, the terminal device may fail to receive an SPS data packet sent by the network device. The network device retransmits the SPS data packet based on the DTX feedback of the terminal device for the SPS data packet. To avoid packet discarding occurring on the terminal device when the network device retransmits the SPS data packet by reusing the HARQ channel, based on the technical solutions of this application, when the quantity of the DTX feedbacks is equal to the quantity of HARQ channels configured for the downlink SPS, the network device may deactivate the downlink SPS in a timely manner, to cause the network device to maintain SPS status consistency with the terminal device in a timely manner, thereby avoiding the data packet discarding occurring on the terminal device.

With reference to the first aspect, in some implementations of the first aspect, before the deactivating the downlink SPS, the method further includes: sending deactivation DCI to the terminal device, where the deactivation DCI indicates the terminal device to deactivate the downlink SPS; and receiving an acknowledgement (acknowledgement, ACK) for the deactivation DCI from the terminal device, where the acknowledgement indicates that the terminal device has successfully received the deactivation DCI. The deactivating the downlink SPS includes: deactivating the downlink SPS based on the acknowledgement.

With reference to the first aspect, in some implementations of the first aspect, the quantity of HARQ channels is preconfigured.

With reference to the first aspect, in some implementations of the first aspect, the DTX feedback is determined when it is detected that energy of a physical uplink shared channel (physical uplink shared channel, PUSCH) is lower than a preset threshold.

According to a second aspect, a method for deactivating downlink semi-persistent scheduling is provided. The method may be performed by a second communication apparatus. The second communication apparatus may be a terminal device, may be a component (for example, a processor, a chip, or a chip system) configured in the terminal device, or may be a logical module or software that can implement all or some functions of the second communication apparatus. This is not limited in this application. The following describes the solutions of this application by using an example in which the second communication apparatus is the terminal device.

The method includes: receiving deactivation DCI from a network device, where the deactivation DCI indicates the terminal device to deactivate the downlink semi-persistent scheduling SPS; and sending an acknowledgement for the deactivation DCI to the network device.

In this application, after the network device and the terminal device enter the downlink SPS, because the terminal device exits the downlink SPS, the terminal device may fail to receive an SPS data packet sent by the network device.

When failing to receive the SPS data packet sent by the network device, the terminal device does not provide feedback to the network device. When a quantity of times that the terminal device does not provide feedback is the same as a quantity of HARQ channels configured by the network device for the downlink SPS, the terminal device receives the deactivation DCI from the network device. In this way, after the terminal device sends the acknowledgement for the deactivation DCI to the network device, the network device may exit the downlink SPS in a timely manner, to help the network device maintain SPS status consistency with the terminal device, thereby avoiding data packet discarding occurring on the terminal device.

According to a third aspect, a communication apparatus is provided, configured to perform the method in any one of the possible implementations in the foregoing aspects. Specifically, the apparatus includes a module configured to perform the method in any possible implementation of any one of the foregoing aspects.

In a design, the apparatus may include a module in one-to-one correspondence with the method/operation/step/action described in either of the foregoing aspects. The module may be implemented by a hardware circuit, software, or a combination of a hardware circuit and software.

In another design, the apparatus is a communication chip. The communication chip may include an input circuit or an interface configured to send information or data, and an output circuit or an interface configured to receive information or data.

In another design, the apparatus is a network device or a terminal device. The network device or the terminal device may include a transmitter configured to send information or data, and a receiver configured to receive information or data.

In another design, the apparatus is configured to perform the method in any possible implementation of any one of the foregoing aspects, and the apparatus may be configured in a network device or a terminal device.

According to a fourth aspect, a communication apparatus is provided, including a processor. The processor is configured to invoke a computer program from a memory and run the computer program, to cause the apparatus to perform the method in any possible implementation of any one of the foregoing aspects.

Optionally, the apparatus further includes the memory, and the memory may be configured to store instructions and data. The memory is coupled to the processor. When the processor executes the instructions stored in the memory, the methods described in the foregoing aspects may be implemented.

Optionally, the apparatus further includes a transmitter (transmitter machine) and a receiver (receiver machine). The transmitter and the receiver may be separately disposed, or may be integrated together and referred to as a transceiver (transceiver machine).

According to a fifth aspect, a computer program product is provided. The computer program product includes a computer program (which may also be referred to as code or instructions). When the computer program is run, a computer is caused to perform the method in any possible implementation of any one of the foregoing aspects.

According to a sixth aspect, a computer-readable storage medium is provided. The computer-readable storage medium stores a computer program (which may also be referred to as code or instructions). When the computer program is run on a computer, the computer is caused to perform the method in any possible implementation of any one of the foregoing aspects.

According to a seventh aspect, this application provides a chip system. The chip system includes at least one processor, configured to support implementation of a function in any one of the foregoing aspects, for example, receiving or processing data in the foregoing method.

In a possible design, the chip system further includes a memory, the memory is configured to store program instructions and data, and the memory is located inside or outside the processor.

Optionally, the chip system may include a chip, or may include a chip and another discrete component.

### BRIEF DESCRIPTION OF DRAWINGS

FIG. 1 is a diagram of transmission of an SPS data packet by a base station and a terminal device;
FIG. 2 is a diagram of a communication scenario to which an embodiment of this application is applicable;
FIG. 3 and FIG. 4 are schematic flowcharts of methods for deactivating downlink SPS according to embodiments of this application;
FIG. 5 is a diagram of transmission of an SPS data packet by a network device and a terminal device according to an embodiment of this application; and
FIG. 6 to FIG. 8 are block diagrams of communication apparatuses according to embodiments of this application.

### DESCRIPTION OF EMBODIMENTS

The following describes technical solutions of this application with reference to accompanying drawings.

Before the method for deactivating downlink semi-persistent scheduling and the related apparatus provided in embodiments of this application are described, the following descriptions are first provided.

First, in embodiments shown below, the terms and English abbreviations such as SPS, DTX, and activation DCI are all examples provided for ease of description, and should not be construed as any limitation on this application. This application does not exclude a possibility of defining, in an existing or future protocol, another term that can implement same or similar functions.

Second, "first", "second", and various numeric numbers in the following embodiments are merely distinguished for ease of description, and are not intended to limit the scope of embodiments of this application.

Third, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, and c may represent a, or b, or c, or a and b, or a and c, or b and c, or a, b, and c, where a, b, and c may be single, or may be plural.

Fourth, "sending" and "receiving" in this application indicate signal transmission directions. For example, "sending deactivation DCI to a terminal device" may be understood as that a destination end of the deactivation DCI is the terminal device, and may include direct sending through an air interface, or indirect sending through an air interface via another unit or module. "Receiving deactivation DCI from a network device" may be understood as that a source end of the deactivation DCI is the network device, and may include direct receiving from the network device through an air interface, or indirect receiving from the network device through an air interface via another unit or module. "Sending" may also be understood as "outputting" of a chip interface, and "receiving" may also be understood as "inputting" of a chip interface.

In other words, sending and receiving may be performed between devices, for example, between a terminal device and a network device; or sending and receiving may be performed inside a device, for example, between components, modules, chips, software modules, or hardware modules inside the device through a bus, a cable, or an interface.

The following describes related technologies and concepts in this application.

### 1. Semi-persistent scheduling

The semi-persistent scheduling may also be referred to as semi-persistent scheduling. Different from dynamic scheduling in which radio resources are allocated to a terminal device once in each TTI, the SPS allows a base station to indicate several (continuous) physical downlink shared channels (physical downlink shared channels, PDSCHs) or PUSCHs by using one piece of DCI or one radio resource control (radio resource control, RRC) reconfiguration message. After receiving specific DCI or a specific RRC reconfiguration message, the terminal device may periodically transmit data on PDSCHs and PUSCHs until such persistent scheduling ends. During the persistent scheduling, the terminal device does not need to perform DCI detection. In comparison with the dynamic scheduling, the SPS can reduce PDCCH overheads and reduce a quantity of DCI blind detections, thereby reducing a latency and power consumption of the terminal device.

The following uses downlink SPS as an example to describe SPS configurations. The SPS may be configured by using information elements in the RRC reconfiguration message. The SPS configurations include but are not limited to: a quantity of HARQ channels used for the SPS, an offset (offset) of an index number of a HARQ channel for the SPS, and an SPS periodicity.

The downlink SPS is configured by using the RRC reconfiguration message and then is activated via a PDCCH. Activating the downlink SPS via the PDCCH includes but is not limited to: scrambling the PDCCH by using a configured scheduling radio network temporary identifier (configured scheduling radio network temporary identifier, CS-RNTI), which is different from a cell radio network temporary identifier (cell radio network temporary identifier, C-RNTI) for dynamic scheduling; and setting both an NDI and downlink feedback information (downlink feedback information, DFI) to 0.

After the base station configures SPS resources for the terminal device, the base station may further send an NDI when sending new data to the terminal device. The terminal device may determine, based on a change in the NDI, whether data being sent is new data or retransmitted data. The NDI has only one bit, which indicates whether data is new data or retransmitted data through toggling. For example, "0" indicates new data, toggling the NDI to "1" indicates retransmitted data, and subsequently toggling the NDI back to "0" indicates new data. The base station may include the NDI in an uplink grant (uplink grant) message, to send the NDI to the terminal device.

### 2. HARQ

The HARQ is a technology that combines forward error correction (feed-forward error correction, FEC) coding and an automatic repeat request (automatic repeat request, ARQ). HARQ retransmission depends on an acknowledgement or a negative acknowledgement (negative acknowledgement, NACK). In other words, a data transmitting end determines, by using an ACK or a NACK fed back by a receiving end, whether to retransmit data. The acknowledgement may also be referred to as a positive acknowledgement or a positive response, and the negative acknowledgement may also be referred to as a negative response.

In the HARQ, retransmission is performed on a per transport block (transport block, TB) basis. If the data receiving end fails to decode a TB sent by the data transmitting end for the 1^{st} time, the data transmitting end may retransmit the TB together with additional redundant bits to reduce a coding rate of a channel, thereby improving a decoding success rate.

For example, in one downlink data transmission, a base station first sends a TB at a moment 0. A terminal device performs PDCCH monitoring and performs decoding on a PDCCH. The terminal device finds that the decoding fails, and in this case, the terminal device feeds back a NACK to the base station via a physical uplink control channel (physical uplink control channel, PUCCH) at a moment 4. The base station demodulates and processes the NACK on the PUCCH, and then schedules, based on downlink resource allocation, a TB that needs to be retransmitted. In this case, scheduling time is not specified. The base station may perform scheduling based on a situation. It is assumed that the base station retransmits the TB on a PDSCH at a moment 6. If successfully decoding the retransmitted TB, the terminal device feeds back an ACK to the base station at a moment 10. In this way, transmission of one TB ends.

### 3. DTX feedback

In wireless communication systems, for example, a 5th generation mobile communication technology (5th generation mobile communication technology, 5G) communication system or a long term evolution (long term evolution, LTE) communication system, a terminal device sends uplink scheduling signaling, a HARQ acknowledgement (HARQ-ACK) for a PDSCH, or channel quality information (channel quality information, CQI) to a base station via a PUCCH. When carrying the HARQ-ACK for the PDSCH on the PUCCH, the terminal device first needs to perform decoding on a PDCCH. If failing to perform correct decoding on the PDCCH (missed detection or false detection of the PDCCH occurs), the terminal device considers that the base station does not allocate resources to the terminal device, or that the terminal device does not correctly obtain resources allocated by the base station. As a result, the terminal device does not decode the corresponding PDSCH, and consequently does not feed back the HARQ-ACK to the base station. A base station side needs to perform DTX status detection to determine whether the terminal device feeds back DTX. When detecting that energy of a PUSCH is less than a preset threshold, the base station considers that the terminal device feeds back the DTX. That the terminal device feeds back the DTX to the base station may also be described as that the terminal device sends a DTX feedback to the base station. The HARQ-ACK is an ACK or a NACK.

In this application, because the terminal device exits SPS unilaterally, a case of missed detection of a PDCCH occurs. Therefore, the terminal device cannot decode a corresponding PDSCH to obtain an SPS data packet, and does not feed back a HARQ-ACK to a network device. In this case, the network device performs DTX detection at a moment of receiving the HARQ-ACK, to determine a DTX feedback from the terminal device for the SPS data packet.

It should be noted that the SPS data packet in this application may be a transport block scheduled by the network device at an SPS transmission moment, and therefore may also be referred to as an SPS transport block (SPS TB).

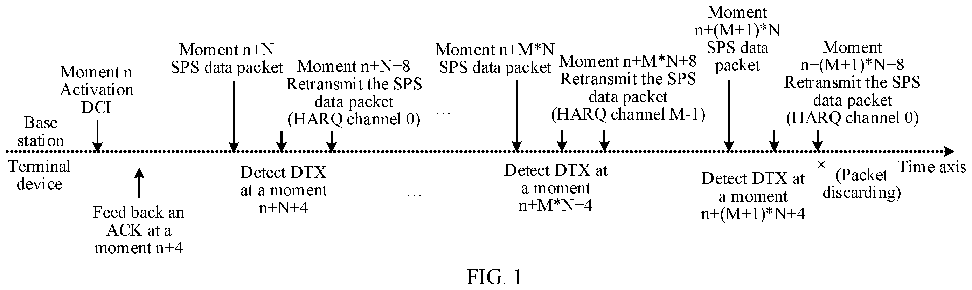

FIG. 1 is a diagram of transmission of an SPS data packet by a base station and a terminal device. In FIG. 1, N represents an SPS periodicity, and M represents a quantity of HARQ channels configured for downlink SPS. The terminal device receives, at a moment n, activation DCI sent by the base station, where the activation DCI is used to activate the downlink SPS of the terminal device. The terminal device enters downlink semi-persistent scheduling based on the activation DCI, and feeds back an ACK to the base station at a moment n+4. Then, if the terminal device unilaterally exits the downlink semi-persistent scheduling due to some reasons, for example, incorrectly detecting (which may also be referred to as falsely detecting) semi-persistent deactivation DCI or poor channel quality, when a semi-persistent scheduling moment (a moment n+N) arrives, because of a semi-persistent status mismatch between the terminal device and the base station, the terminal device does not provide any feedback, for example, an ACK or a NACK, for the SPS data packet. At a moment n+N+4, the base station receives no feedback, and performs retransmission processing based on a DTX feedback. To be specific, the base station scrambles the SPS data packet at a subsequent moment n+N+8 by using a C-RNTI, and retransmits the SPS data packet via a HARQ channel 0. The terminal device may normally receive and parse the retransmitted SPS data packet.

At a subsequent semi-persistent scheduling moment, because of a semi-persistent status mismatch between the terminal device and the base station, the terminal device always does not provide any feedback for an SPS data packet transmitted by the base station at each semi-persistent scheduling moment, and the base station performs retransmission processing based on a DTX feedback. When a semi-persistent scheduling moment (a moment n+(M+1)*N) arrives, the base station sends an SPS data packet to the terminal device. Similarly, at a moment n+(M+1)*N+4, the terminal device does not provide any feedback for the SPS data packet, and the base station continues to perform retransmission processing based on a DTX feedback. In this case, the base station has consecutively detected M+1 DTX feedbacks, where the quantity M+1 exceeds the quantity M of HARQ channels configured for the downlink SPS.

At a moment n+(M+1)*N+8, because ACKs for all SPS data packets retransmitted via the M HARQ channels have been received, and the M HARQ channels are in a state in which the M HARQ channels can be reused, the base station may reuse the HARQ channel. For example, the base station continues to use the HARQ channel 0 to retransmit the SPS data packet scrambled by using the C-RNTI. After receiving the retransmitted SPS data packet, the terminal device finds that an index number of the HARQ channel used for the current retransmission of the SPS data packet is the same as an index number of a HARQ channel used for a 1^{st} transmission of the SPS data packet (in FIG. 1, both the HARQ channels are the HARQ channel 0), and NDIs in the two transmissions are also the same (because an NDI for SPS retransmission is fixed to 1). Therefore, the terminal device may mistakenly consider that a same data packet is retransmitted in the two retransmissions, and further, the terminal device discards the SPS data packet that is currently received, causing data packet discarding and reducing communication quality. An example of FIG. 1 is shown in Table 1.

**Table 1**

| SPS subframe | Index number of a HARQ channel | Feedback | NDI |
|---|---|---|---|
| TTI 0 | 2 | DTX | 0 |
| TTI 8 | 2 | ACK | 1 |
| TTI 20 | 1 | DTX | 0 |
| TTI 28 | 1 | ACK | 1 |
| TTI 40 | 0 | DTX | 0 |
| TTI 48 | 0 | ACK | 1 |
| TTI 60 | 2 | DTX | 0 |
| TTI 68 | 2 | ACK | 1 |

In Table 1, the quantity M of HARQ channels is 3, and index numbers of the three HARQ channels are respectively "2", "1", and "0". An SPS periodicity N=20 TTIs (20 ms). The TTI 0, the TTI 20, the TTI 40, and the TTI 60 are SPS transmission moments, for example, the moment n+N and the moment n+(M+1)*N in FIG. 1. The TTI 8, the TTI 28, the TTI 48, and the TTI 68 are retransmission moments of the SPS data packet, for example, the moment n+N+8 and the moment n+(M+1)*N+8 in FIG. 1. An SPS data packet transmitted at an SPS transmission moment may also be referred to as an initially transmitted SPS data packet at the moment, and an SPS data packet transmitted at a retransmission moment corresponding to the SPS transmission moment is referred to as a retransmitted SPS data packet at the moment. The SPS transmission moment and the retransmission moment are separated by 8 TTIs.

In Table 1, the terminal device fails to receive an SPS data packet (that is, the initially transmitted SPS data packet) sent by the network device at the TTI 0. Therefore, the terminal device does not provide any feedback to the network device. The network device performs retransmission processing based on a DTX feedback. Specifically, the network device retransmits, at the TTI 8 via the HARQ channel whose index number is "2", the SPS data packet sent at the TTI 0 (that is, SPS data packet retransmission).

Similarly, the terminal device fails to receive an SPS data packet sent by the network device at the TTI 20. Therefore, the terminal device does not provide any feedback to the network device. The network device performs retransmission processing based on a DTX feedback. Specifically, the network device retransmits, at the TTI 28 via the HARQ channel whose index number is "1", the SPS data packet sent at the TTI 20.

Similarly, the terminal device fails to receive an SPS data packet sent by the network device at the TTI 40. Therefore, the terminal device does not provide any feedback to the network device. The network device performs retransmission processing based on a DTX feedback. Specifically, the network device retransmits, at the TTI 48 via the HARQ channel whose index number is "0", the SPS data packet sent at the TTI 0.

Similarly, the terminal device fails to receive an SPS data packet sent by the network device at the TTI 60. Therefore, the terminal device does not provide any feedback to the network device. The network device performs retransmission processing based on a DTX feedback. Specifically, the network device retransmits, at the TTI 68 by reusing the HARQ channel whose index number is "2", the SPS data packet sent at the TTI 0. The index number of the HARQ channel used by the network device to retransmit the SPS data packet at the TTI 68 is the same as the index number of the HARQ channel used by the network device to retransmit the SPS data packet at the TTI 8, and the NDI is not toggled and is still 1. Therefore, the terminal device considers that the data packet that is currently scheduled and the data packet scheduled at the TTI 8 are the same data packet, so that the terminal device discards the currently retransmitted SPS data packet according to duplicate packet processing.

It should be noted that, at each retransmission moment, the network device scrambles the SPS data packet by using the C-RNTI in a dynamic scheduling manner, to perform retransmission. It is the 1^{st} time for the terminal device to receive the SPS data packet. This is because the terminal device has exited the SPS and fails to receive the SPS data packet scrambled by using the CS-RNTI at the SPS transmission moment.

It should be noted that SPS data packets transmitted by the network device at a plurality of SPS transmission moments are different. For example, in Table 1, SPS data packets transmitted by the network device at the TTI 0, the TTI 20, the TTI 40, and the TTI 60 are different.

In view of data packet discarding occurring in a scenario in which the network device retransmits the SPS data packet by reusing the HARQ channel, embodiments of this application provide a method for deactivating downlink semi-persistent scheduling and a related apparatus. When a network device consecutively detects DTX feedbacks because a terminal device unilaterally exits downlink SPS, the network device may adjust, based on a quantity of HARQ channels that can be used for the downlink SPS, a threshold for sending deactivation DCI, to avoid data packet discarding occurring on the terminal device and caused when the network device retransmits the SPS data packet by reusing the HARQ channel, thereby improving communication quality.

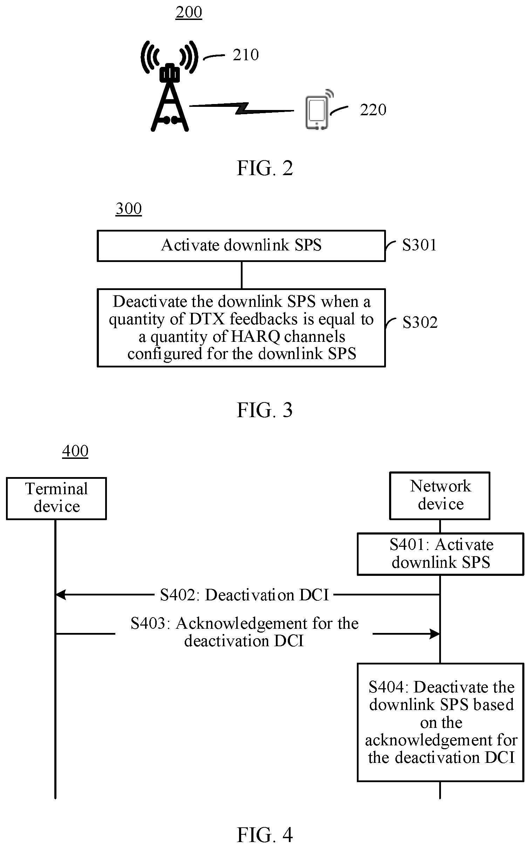

FIG. 2 is a diagram of a communication scenario 200 to which an embodiment of this application is applicable. As shown in FIG. 2, the communication scenario 200 may include a network device 210 and a terminal device 220. FIG. 2 is merely a diagram. The communication scenario 200 may further include another network device, for example, may further include a wireless relay device and a wireless backhaul device, which are not shown in FIG. 2. A quantity of network devices and a quantity of terminal devices included in the communication scenario 200 are not limited in embodiments of this application.

The terminal device is connected to the network device in a wireless manner, and the network device is connected to a core network device in a wireless or wired manner. The core network device and the network device may be different physical devices independent of each other; functions of the core network device and logical functions of the network device may be integrated into a same physical device; or some functions of the core network device and some functions of the network device may be integrated into one physical device. The terminal device may be at a fixed position, or may be mobile.

The network device provided in embodiments of this application may be a base station (base station), a NodeB (NodeB), an evolved NodeB (evolved NodeB, eNodeB, or eNB), a transmission reception point (transmission reception point, TRP), a next generation NodeB (next generation NodeB, gNB) in 5G, a network device in an open radio access network (open radio access network, O-RAN, or open RAN), or a next generation base station in a 6th generation mobile communication technology (6th generation mobile communication technology, 6G). Alternatively, the network device may be a satellite base station in a non-terrestrial network (non-terrestrial network, NTN) communication network, a base station in a future mobile communication system, an access node in a wireless fidelity (wireless fidelity, Wi-Fi) system, or the like. Alternatively, the network device may be a module or unit that completes some functions of the base station, for example, may be a central unit (central unit, CU) or a distributed unit (centralized unit, DU). Functions of the CU may be implemented by one entity, or may be implemented by different entities. For example, the function of the CU may be further divided. For example, a control plane (control plane, CP) and a user plane (user plane, UP) are separated as a CU control plane (CU-CP) and a CU user plane (CU-UP). The network device may be a satellite base station, or may be a macro base station. Alternatively, the network device may be a micro base station or an indoor base station, or may be a relay node, a donor node, or the like. A specific technology and a specific device form that are used for the network device are not limited in this application.

The terminal device provided in embodiments of this application may also be referred to as a terminal, user equipment (user equipment, UE), a mobile station, a mobile terminal, or the like. The terminal device may be widely used in various scenarios for communication. The scenario includes, for example but not limited to, at least one of the following scenarios: enhanced mobile broadband (enhanced mobile broadband, eMBB), ultra-reliable low-latency communication (ultra-reliable low-latency communication, URLLC), massive machine type communication (massive machine type communication, mMTC), device-to-device (device-to-device, D2D) communication, vehicle-to-everything (vehicle-to-everything, V2X) communication, machine-type communication (machine-type communication, MTC), internet-of-things (internet-of-things, IoT) communication, virtual reality, augmented reality, industrial control, autonomous driving, remote medical, a smart grid, smart furniture, a smart office, a smart wearable, smart transportation, a smart city, or the like. The terminal may be a mobile phone, a tablet computer, a computer with a wireless transceiver function, a wearable device, a vehicle, a helicopter, an airplane, an uncrewed aerial vehicle, a ship, a robot, a robotic arm, a smart household device, or the like. A specific technology and a specific device form that are used for the terminal device are not limited in this application.

The network device and/or the terminal device may be at fixed positions, or may be mobile. The network device and/or the terminal device may be deployed terrestrially, including indoors or outdoors, or may be handheld or vehicle-mounted, may be deployed on a water surface, or may be deployed on an airplane, a balloon, and an artificial satellite in the air. An environment/scenario in which the network device and the terminal device are located is not limited in this application. The network device and the terminal device may be deployed in a same environment/scenario or different environments/scenarios. For example, the network device and the terminal device are both deployed terrestrially. Alternatively, the network device is deployed terrestrially, and the terminal device is deployed on the water surface. Examples are not enumerated herein. A method for communication between the network device and the terminal device is not limited in this application.

In embodiments of this application, the terminal device and the network device may be hardware devices, or may be software functions running on dedicated hardware, or a software function running on general-purpose hardware, for example, a virtualization function instantiated on a platform (for example, a cloud platform), or an entity including a dedicated or general-purpose hardware device and a software function. Specific forms of the terminal device and the network device are not limited in this application.

The technical solutions in embodiments of this application may be applied to various communication systems, for example, an LTE system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5G mobile communication system, or a future evolved communication system, and a vehicle-to-X (vehicle-to-X V2X), where the V2X may include a vehicle-to-network (vehicle-to-network, V2N), a vehicle-to-vehicle (vehicle-to-vehicle, V2V), a vehicle-to-infrastructure (vehicle-to-infrastructure, V2I), a vehicle-to-pedestrian (vehicle-to-pedestrian, V2P), and the like; and a long term evolution-vehicle (long term evolution-vehicle, LTE-V), an internet of vehicles, machine type communication (machine type communication, MTC), an internet of things (Internet of things, IoT), a long term evolution-machine (long term evolution-machine, LTE-M), a machine-to-machine (machine-to-machine, M2M), and a device-to-device (device-to-device, D2D).

FIG. 3 is a schematic flowchart of a method 300 for deactivating downlink SPS according to an embodiment of this application. Steps of the method 300 may be performed by a network device. The network device may be, for example, a base station. A specific form of the network device is not limited in this embodiment of this application.

The method 300 includes S301 and S302, and details are as follows:
S301: Activate the downlink SPS.

Activating the downlink SPS by the network device relates to a process of interacting with a terminal device. Specifically, the network device sends activation DCI to the terminal device, where the activation DCI indicates the terminal device to activate the downlink SPS; and the terminal device activates the downlink SPS based on the activation DCI, and sends an acknowledgement for the activation DCI to the network device, where the acknowledgement for the activation DCI indicates that the terminal device has successfully received the activation DCI. The network device activates the downlink SPS based on the acknowledgement for the activation DCI. In other words, after receiving the acknowledgement for the activation DCI, the network device determines that the terminal device has successfully received the activation DCI. Therefore, the network device may activate the DCI to maintain SPS status consistency with the terminal device, so that data transmission can be performed in an SPS manner. For specific descriptions of activating the downlink SPS, refer to the foregoing descriptions. Details are not described herein again.

S302: Deactivate the downlink SPS when a quantity of DTX feedbacks is equal to a quantity of HARQ channels configured for the downlink SPS.

In this step, the DTX feedback indicates that the terminal device fails to receive an SPS data packet. Deactivating the downlink SPS may include releasing an SPS resource. After deactivating the SPS, the network device performs data transmission in a dynamic scheduling manner.

Optionally, the quantity of HARQ channels is preconfigured by the network device. The network device may send information, for example, the quantity of HARQ channels and an index number of the HARQ channel, to the terminal device by using an RRC reconfiguration message.

It should be understood that, after entering the downlink SPS, the terminal device may exit the downlink SPS due to some reasons, but the network device is unaware of the exit. After exiting the downlink SPS, the terminal device does not perform decoding on a PDCCH at time that is for receiving the SPS data packet and that is indicated by an SPS configuration, causing missed detection of the PDCCH, and consequently, the terminal device fails to receive the SPS data packet sent by the network device. In this case, the terminal device does not provide any feedback for the SPS data packet. When detecting that energy of a PUSCH is less than a preset threshold, the network device considers that the terminal device performs DTX feedback for the SPS data packet, and the network device performs retransmission processing on the SPS data packet based on the DTX feedback.

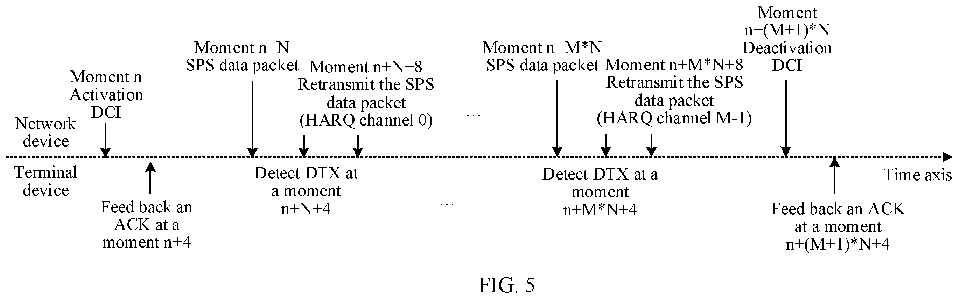

When one semi-persistent scheduling moment arrives, the network device sends, to the terminal device, an SPS data packet scrambled by using a CS-RNTI. The SPS data packet is a newly transmitted data packet. In other words, the SPS data packet is transmitted for the 1^{st} time. In a process of retransmitting the SPS data packet, the network device sends, to the terminal device in a dynamic scheduling manner, the SPS data packet scrambled by using the C-RNTI. After successfully receiving the retransmitted SPS data packet, the terminal device sends an ACK to the network device, so that the network device may continue to send, when a next semi-persistent scheduling moment arrives, an SPS data packet scrambled by using an CS-RNTI. For a specific process of SPS transmission by the network device and the terminal device, refer to the following descriptions for FIG. 5.

In this embodiment of this application, the network device deactivates the downlink SPS when the quantity of DTX feedbacks is equal to the quantity of HARQ channels configured for the downlink SPS. In this way, the network device can maintain SPS status consistency with terminal device in a timely manner. This helps avoid data packet discarding occurring on the terminal device and caused by retransmitting the data packet by reusing the HARQ channel, thereby improving communication quality. The SPS status is an activated state or a deactivated state.

FIG. 4 is a schematic flowchart of another method 400 for deactivating downlink SPS according to an embodiment of this application. Steps of the method 400 may be performed by a network device and a terminal device through interaction. The network device may be, for example, a base station, and the terminal device may be, for example, a mobile phone. Specific forms of the network device and the terminal device are not limited in this embodiment of this application.

The method 400 includes S401 to S404, and details are as follows:
S401: The network device activates the downlink SPS.

For descriptions of this step, refer to the foregoing descriptions of S301. Details are not described herein again.

S402: When a quantity of DTX feedbacks is equal to a quantity of HARQ channels configured for the downlink SPS, the network device sends deactivation DCI to the terminal device, where the deactivation DCI indicates the terminal device to deactivate the downlink SPS. Correspondingly, the terminal device receives the deactivation DCI.

In this step, for a reason why the network device detects the DTX feedback, refer to the foregoing descriptions of S302. Details are not described herein again. When determining that the quantity of DTX feedbacks is equal to the quantity of HARQ channels configured for the downlink SPS, the network device considers that an exception may occur on the downlink SPS of the terminal device, but the network device does not know that the terminal device has exited the SPS. In other words, a behavior that the terminal device exits the downlink SPS is unknown to the network device. Therefore, after determining that the downlink SPS needs to be deactivated, the network device sends the deactivation DCI to the terminal device, to indicate the terminal device to deactivate the downlink SPS, so that the network device maintains SPS status consistency with the terminal device.

S403: The terminal device sends an acknowledgement for the deactivation DCI to the network device. Correspondingly, the network device receives the acknowledgement for the deactivation DCI.

In this step, the acknowledgement for the deactivation DCI indicates that the terminal device has successfully received the deactivation DCI.

S404: The network device deactivates the downlink SPS based on the acknowledgement for the deactivation DCI.

In this step, the network device may confirm, based on the acknowledgement for the deactivation DCI, that the terminal device has successfully received the deactivation DCI. Therefore, the network device may deactivate the downlink SPS. Deactivating the downlink SPS may also be described as exiting the downlink SPS. Deactivating the downlink SPS may include releasing a downlink SPS resource.

FIG. 5 is a diagram of transmission of an SPS data packet by a network device and a terminal device according to an embodiment of this application. In FIG. 5, N represents an SPS periodicity, and M represents a quantity of HARQ channels configured for downlink SPS.

As shown in FIG. 5, the terminal device receives, at a moment n, activation DCI sent by the network device, where the activation DCI is used to activate the downlink SPS of the terminal device. The terminal device enters downlink semi-persistent scheduling based on the activation DCI, and sends an ACK for the activation DCI to the network device at a moment n+4. Then, if the terminal device unilaterally exits the downlink semi-persistent scheduling, when a semi-persistent scheduling moment (a moment n+N) arrives, because of a semi-persistent status mismatch between the terminal device and the network device, the terminal device does not provide any feedback, for example, an ACK or a NACK, for the SPS data packet. At a moment n+N+4, the network device receives no feedback, and performs retransmission processing based on a DTX feedback. To be specific, the network device scrambles the SPS data packet at a subsequent moment n+N+8 by using a C-RNTI, and retransmits the SPS data packet via a HARQ channel 0. The terminal device may normally receive and parse the retransmitted SPS data packet.

At a subsequent semi-persistent scheduling moment, because of a semi-persistent status mismatch between the terminal device and the network device, the terminal device always does not provide any feedback for an SPS data packet transmitted by the network device at each semi-persistent scheduling moment, and the network device performs retransmission processing based on a DTX feedback. As shown in FIG. 5, when a quantity of detected DTX feedbacks is equal to a quantity M of HARQ channels configured for the downlink SPS, the network device sends deactivation DCI to the terminal device when a semi-persistent scheduling moment (a moment n+(M+1)*N) arrives, where the deactivation DCI indicates the terminal device to deactivate the downlink SPS. After receiving the deactivation DCI, the terminal device sends an ACK for the deactivation DCI to the network device. After receiving the ACK at a moment n+(M+1)*N+4, the network device deactivates the downlink SPS. In this way, the network device maintains downlink SPS status consistency with the terminal device. Then, the network device may send data to the terminal device in a dynamic scheduling manner. An example of FIG. 5 is shown in Table 2.

**Table 2**

| SPS subframe | Index number of a HARQ channel | Feedback | NDI |
|---|---|---|---|
| TTI 0 | 2 | DTX | 0 |
| TTI 8 | 2 | ACK | 1 |
| TTI 20 | 1 | DTX | 0 |
| TTI 28 | 1 | ACK | 1 |
| TTI 40 | 0 | DTX | 0 |
| TTI 48 | 0 | ACK | 1 |

In Table 2, the quantity M of HARQ channels is 3, and index numbers of the three HARQ channels are respectively "2", "1", and "0". An SPS periodicity N=20 TTIs (20 ms). The TTI 0 the TTI 20, and the TTI 40 are SPS transmission moments, for example, the moment n+N and a moment n+M*N in FIG. 5. The TTI 8, the TTI 28, and the TTI 48 are retransmission moments of the SPS data packet, for example, the moment n+N+8 and a moment n+(M)*N+8 in FIG. 5. The SPS transmission moment and the retransmission moment are separated by 8 TTIs.

For descriptions of Table 2, refer to the foregoing descriptions of Table 1. A difference lies in that when the quantity of DTX feedbacks is 3, in other words, when the quantity of the DTX feedbacks is equal to the quantity of HARQ channels, the network device no longer reuses the HARQ channel for retransmission, but sends the deactivation DCI to the terminal device to indicate the terminal device to deactivate the downlink SPS. After receiving, from the terminal device, the ACK for the deactivation DCI, the network device deactivates the downlink SPS.

It should be understood that sequence numbers of the foregoing processes do not mean execution sequences. The execution sequence of the processes should be determined based on functions and internal logic of the processes, and should not be construed as any limitation on implementation processes of embodiments of this application.

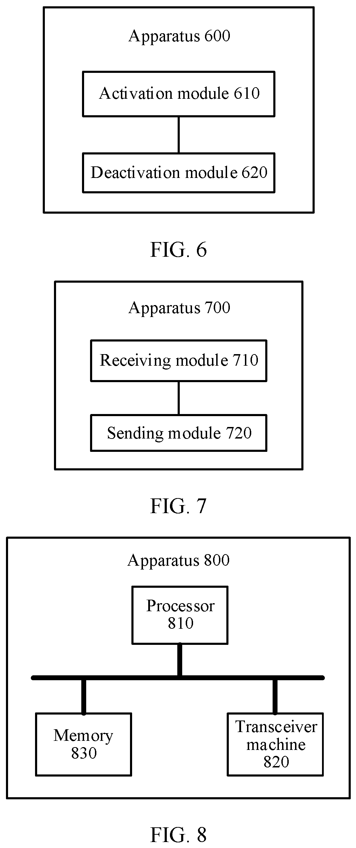

The foregoing describes in detail the method for deactivating the downlink SPS according to embodiments of this application with reference to FIG. 3 to FIG. 5. The following describes in detail communication apparatuses according to embodiments of this application with reference to FIG. 6 to FIG. 8.

FIG. 6 is a block diagram of a communication apparatus 600 according to an embodiment of this application. The apparatus 600 includes an activation module 610 and a deactivation module 620.

The activation module 610 is configured to activate downlink SPS. The deactivation module 620 is configured to deactivate the downlink SPS when a quantity of DTX feedbacks is equal to a quantity of HARQ channels configured for the downlink SPS, where the DTX feedback indicates that a terminal device fails to receive an SPS data packet.

Optionally, the apparatus 600 further includes a transceiver module. The transceiver module is configured to: send deactivation DCI to the terminal device, where the deactivation DCI indicates the terminal device to deactivate the downlink SPS; and receive, from the terminal device, an acknowledgement for the deactivation DCI, where the acknowledgement indicates that the terminal device has successfully received the deactivation DCI. The deactivation module 620 is configured to deactivate the downlink SPS based on the acknowledgement.

Optionally, a quantity of HARQ channels is preconfigured.

Optionally, the DTX feedback is determined when it is detected that energy of a PUSCH is lower than a preset threshold.

In an optional example, a person skilled in the art may understand that the apparatus 600 may be specifically the network device in the foregoing embodiments, or functions of the network device in the foregoing embodiments may be integrated into the apparatus 600. The functions may be implemented by hardware, or may be implemented by hardware executing corresponding software. The hardware or the software includes one or more modules corresponding to the function. For example, the transceiver module may be a communication interface, for example, a transceiver interface. The apparatus 600 may be configured to perform procedures and/or steps corresponding to the network device in the foregoing method embodiments.

FIG. 7 is a block diagram of a communication apparatus 700 according to an embodiment of this application. The apparatus 700 includes a receiving module 710 and a sending module 720.

The receiving module 710 is configured to receive deactivation DCI from a network device, where the deactivation DCI indicates to deactivate downlink SPS. The sending module 720 is configured to send an acknowledgement for the deactivation DCI to the network device, where the acknowledgement indicates that the deactivation DCI has been successfully received.

In an optional example, a person skilled in the art may understand that the apparatus 700 may be specifically the terminal device in the foregoing embodiments, or functions of the terminal device in the foregoing embodiments may be integrated into the apparatus 700. The functions may be implemented by hardware, or may be implemented by hardware executing corresponding software. The hardware or the software includes one or more modules corresponding to the function. For example, the receiving module 710 may be a communication interface, for example, a transceiver interface. The apparatus 700 may be configured to perform procedures and/or steps corresponding to the terminal device in the foregoing method embodiments.

It should be understood that the apparatus 600 and the apparatus 700 herein are embodied in a form of functional modules. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combined logical circuit, and/or another appropriate component that supports the described function.

In embodiments of this application, the apparatus 600 and the apparatus 700 may alternatively be chips or chip systems, for example, a system on chip (system on chip, SoC). Correspondingly, the transceiver module may be a transceiver circuit of the chip. This is not limited herein.

FIG. 8 is a block diagram of another communication apparatus 800 according to an embodiment of this application. The apparatus 800 includes a processor 810, a transceiver machine 820, and a memory 830. The processor 810, the transceiver machine 820, and the memory 830 communicate with each other via an internal connection channel. The memory 830 is configured to store instructions. The processor 810 is configured to execute the instructions stored in the memory 830, to control the transceiver machine 820 to send a signal and/or receive a signal.

It should be understood that the apparatus 800 may be specifically the network device or the terminal device in the foregoing embodiments, or functions of the network device or the terminal device in the foregoing embodiments may be integrated into the apparatus 800, and the apparatus 800 may be configured to perform the steps and/or procedures corresponding to the network device or the terminal device in the foregoing method embodiments. Optionally, the memory 830 may include a read-only memory and a random access memory, and provide instructions and data to the processor. A part of the memory may further include a non-volatile random access memory. For example, the memory may further store information of a device type. The processor 810 may be configured to execute the instructions stored in the memory. When the processor executes the instructions, the processor 810 may perform the steps and/or procedures corresponding to the network device or the terminal device in the foregoing method embodiments.

It should be understood that, in embodiments of this application, the processor may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads instructions in the memory and completes the steps in the foregoing methods in combination with hardware of the processor. To avoid repetition, details are not described herein again.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all the modules may be selected according to actual needs to achieve the objectives of the solutions of embodiments.

In addition, functional modules in embodiments of this application may be integrated into one processing module, or each of the modules may exist alone physically, or two or more modules may be integrated into one module.

When the functions are implemented in the form of a software functional module and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for deactivating downlink semi-persistent scheduling, comprising:
activating the downlink semi-persistent scheduling SPS; and
deactivating the downlink SPS when a quantity of discontinuous transmission DTX feedbacks is equal to a quantity of hybrid automatic repeat request HARQ channels configured for the downlink SPS, wherein the DTX feedback indicates that a terminal device fails to receive an SPS data packet.

2. The method according to claim 1, wherein before the deactivating the downlink SPS, the method further comprises:
sending deactivation downlink control information DCI to the terminal device, wherein the deactivation DCI indicates the terminal device to deactivate the downlink SPS; and
receiving, from the terminal device, an acknowledgement for the deactivation DCI, wherein the acknowledgement indicates that the terminal device has successfully received the deactivation DCI; and
the deactivating the downlink SPS comprises:
deactivating the downlink SPS based on the acknowledgement.

3. The method according to claim 1 or 2, wherein the quantity of HARQ channels is preconfigured.

4. The method according to any one of claims 1 to 3, wherein the DTX feedback is determined when it is detected that energy of a physical uplink shared channel PUSCH is lower than a preset threshold.

5. A method for deactivating downlink semi-persistent scheduling, comprising:
receiving deactivation DCI from a network device, wherein the deactivation DCI indicates a terminal device to deactivate the downlink semi-persistent scheduling SPS; and
sending an acknowledgement for the deactivation DCI to the network device, wherein the acknowledgement indicates that the terminal device has successfully received the deactivation DCI.

6. A communication apparatus, comprising an activation module and a deactivation module, wherein
the activation module is configured to activate downlink semi-persistent scheduling SPS; and
the deactivation module is configured to deactivate the downlink SPS when a quantity of DTX feedbacks is equal to a quantity of HARQ channels configured for the downlink SPS, wherein the DTX feedback indicates that a terminal device fails to receive an SPS data packet.

7. The apparatus according to claim 6, wherein the apparatus further comprises a transceiver module, and the transceiver module is configured to:
send deactivation DCI to the terminal device, wherein the deactivation DCI indicates the terminal device to deactivate the downlink SPS; and
receive, from the terminal device, an acknowledgement for the deactivation DCI, wherein the acknowledgement indicates that the terminal device has successfully received the deactivation DCI; and
the deactivation module is configured to:
deactivate the downlink SPS based on the acknowledgement.

8. A communication apparatus, comprising a receiving module and a sending module, wherein
the receiving module is configured to receive deactivation DCI from a network device, wherein the deactivation DCI indicates to deactivate downlink semi-persistent scheduling SPS; and
the sending module is configured to send an acknowledgement for the deactivation DCI to the network device, wherein the acknowledgement indicates that the deactivation DCI has been successfully received.

9. A communication apparatus, comprising a processor, wherein the processor is coupled to a memory, the memory is configured to store a program or instructions, and when the program or the instructions are executed by the processor, the method according to any one of claims 1 to 4 is performed, or the method according to claim 5 is performed.

10. A computer-readable storage medium, configured to store a computer program, wherein when the computer program is run on a computer, the method according to any one of claims 1 to 4 is performed, or the method according to claim 5 is performed.

11. A computer program product, wherein the computer program product comprises instructions, and when the computer program is run, a computer is caused to perform the method according to any one of claims 1 to 4, or perform the method according to claim 5.

12. An apparatus, comprising a unit configured to perform the method according to any one of claims 1 to 4, or comprising a unit configured to perform the method according to claim 5.
